# EUROPEAN PATENT SPECIFICATION

(11) **EP 3 139 764 B1**
(45) Date of publication and mention of the grant of the patent: **10.06.2020**
(21) Application number: 15726283.3
(22) Date of filing: 08.04.2015
(51) Int. Cl.: A23K 10/00, A23K 10/16, A23K 40/00, A23K 20/158, A23K 20/10

(54) **METHOD FOR PRODUCING AN ANIMAL FEED AND USE THEREOF**
VERFAHREN ZUR HERSTELLUNG EINES TIERFUTTER UND VERWENDUNGEN DAVON
PROCÉDÉ DE PRODUCTION D'ALIMENTS POUR ANIMAUX ET LEUR UTILISATION

(30) Priority: 08.04.2014 IT MI20140646
(43) Date of publication of application: 15.03.2017
(73) Proprietor: Sevecom S.p.A., 20121 Milano (IT)
(72) Inventor: SERINO, Nazzaro, I-20121 Milano (IT)
(74) Representative: Hoffmann Eitle
(86) International application number: PCT/IB2015/000452
(87) International publication number: WO 2015/155590

(56) References cited:
- EP-A1- 0 755 195
- WO-A1-2012/168786
- WO-A1-2013/003080
- US-A- 4 701 331
- US-A1- 2012 148 718

## Description

The present invention relates to a process for producing an animal feed which comprises the use of emulsifiers in association or in admixture with vegetable oleins and glycols. Furthermore, the present invention relates to a feed obtained with said process having improved physical properties and technical production characteristics. The present invention further relates to the use of said feed in animal nutrition. Finally, the present invention relates to the use of emulsifiers E484 and/or E487 (Community Register of Feed Additives - EU Reg. No. 1831/2003) in association or in admixture with vegetable oleins and glycols, as a technological additive to increase hourly output (tons/hour) in an animal feed production plant and/or improve the characteristics of an animal feed, preferably in the form of pellets, in terms of thermal stability and/or of stability against microbial growth following long-term storage and/or to reduce the dustiness thereof.

In the sector of production of animal feeds, preferably in solid form, for example in the form of granules or pellets, a need has long been felt to be able to produce large amounts per day at increasingly lower costs while maintaining high standards as regards the technical characteristics and chemical and/or physical properties of the feed itself, together with optimal nutritional characteristics of the feed, which are reflected, for example, in terms of an increase in body weight (BW) and an improved feed conversion rate (FCR).

In practice, animal feed manufacturers tend on the one hand to increase the output of their plants and on the other hand to contain production costs, but always with a view to improving the technological characteristics of feed production and the nutritional characteristics thereof. Maximizing the output of their plants means that animal feed manufacturers do not have to design and build new plants, while saving on production costs means being increasingly competitive. Among the factors that most greatly impact the cost of producing an animal feed we may mention, for example, the cost of the electricity needed for the equipment and the downtimes that result every time the equipment is disabled due to the activation of the equipment safety systems, which are triggered every time there is an increase in temperature due to friction during the mixing, compression and/or pelleting steps, or an excessive demand of energy from the motors present in the plant. Practically speaking, depending on the type of feed being produced in a plant, for example a feed for chickens, turkeys, pigs, ruminants or fish, there is a considerable variation in the type of raw materials used and equipment parameters, so that "standardization of production cycles" is not always easy to achieve.

WO 2012/168786 A1 relates to the use of emulsifiers E484 and/or E487 in association with vegetable oleins, as a technological additive to increase hourly output (tons/hour) in an animal feed production plant and/or improve the characteristics of an animal feed, preferably in the form of pellets, and/or to reduce the dustiness thereof.

Furthermore, animal feed manufacturers have an interest in reducing the consumption of electricity and amount of dust allowed in workplaces.

To the above we may add the need to produce animal feeds with improved nutritional characteristics in terms, for example, of an increase or gain in body weight and an improved feed conversion rate, increased stability at uncontrolled temperatures and increased stability against microbial growth so as to reduce the costs of feed storage and transport.

Finally, it would be desirable to be able to have a mixture in liquid form having an intended use of a technological and at the same time nutritional character in the production of animal feeds capable of being used at different outdoor temperatures and therefore of being transported to production sites situated at different latitudes, while avoiding freezing phenomena and at the same time maintaining a homogeneous composition from a qualitative and/or quantitative standpoint.

Therefore, industry operators feel a need to be able to give an adequate response to the above-mentioned limits and disadvantages.

One of the objects of the present invention relates to the fact of being able to increase the hourly output (tons/hour) in plants that produce animal feeds in solid form, for example in the form of pellets or granules, while maintaining high standards as regards the technical characteristics and chemical and/or physical properties of the feed itself, such as, for example, the pellet durability index (PDI) and, at the same time, a greatly reduced amount of dust. In any case, in addition to the above-mentioned technical characteristics, it is necessary to ensure optimal nutritional characteristics of the feed which are reflected, for example, in terms of an increase or gain in body weight and an improved feed conversion rate.

Another object of the present invention relates to the fact of being able to contain feed production costs, which means reducing electricity consumption expressed as amperes/hour, while maintaining a feed palatability that is acceptable for animals and a high digestibility.

Another object of the present invention relates to the fact of being able to produce an animal feed in solid form, for example in the form of pellets or granules, which is stable over time against microbial growth. Yet another object of the present invention relates to the fact of being able to reduce the amount of dust produced in an animal feed in solid form, for example in the form of pellets or granules, obtaining pellets or granules with a high thermal stability at the production stage.

After long and intense research activity, the Applicant has surprisingly found that the above objects, and yet other objects which will be apparent from the detailed description that follows, are achieved thanks to the use of a mixture comprising or, alternatively, consisting of an emulsifier included in the list of additives authorized under EU regulation No. 1831/2003, vegetable oleins and glycols.

The present invention relates to a mixture comprising or, alternatively, consisting of (i) an ethoxylated castor oil and/or polyethylene glycol esters of fatty acids obtained from soybean oil, (ii) vegetable oleins and (iii) glycols acceptable in animal nutrition, having the features as set forth in the appended claim.

The present invention relates to an animal feed containing said mixture, having the features as set forth in the appended claim.

The present invention relates to a process for producing animal feeds which comprises the use of said mixture, having the features as set forth in the appended claim.

The present invention relates to the use of said mixture for preparing an animal feed, having the features as set forth in the appended claim.

Preferred embodiments of the present invention will be illustrated in the detailed description that follows.

Ethoxylated castor oil, also known by the name glyceryl polyethylene glycol ricinoleate or glycerol polyethylene glycol ricinoleate (additive E484 - EU Reg. 1831/2003) is a surfactant compound or emulsifier included in the list of authorized animal feed additives.

The ethoxylated castor oil used in the mixture of the present invention can contain from 8 to 200 ethyleneoxy groups; preferably from 10 to 150 ethyleneoxy groups; even more preferably from 15 to 100 ethyleneoxy groups. The mixture of the present invention comprises an ethoxylated castor oil having from 20 to 80 ethyleneoxy groups; preferably from 25 to 60 ethyleneoxy groups; even more preferably 40 ethyleneoxy groups. Advantageously, the ethoxylated castor oil contains from 30 to 45 ethyleneoxy groups.

By ethoxylated castor oil containing, for example, 20 ethyleneoxy groups (an ethyleneoxy group derives from the ethoxylation of castor oil with ethylene oxide), we mean a product obtained by reacting 1 mole of castor oil [by way of example, castor oil in general can contain ricinoleic acid in an amount by weight comprised from 85% to 95%, oleic acid in an amount by weight comprised from 2% to 6%, linoleic acid in an amount by weight comprised from 5 to 1%, linolenic acid in an amount by weight comprised from 1 to 0.5%, stearic acid in an amount comprised from 1 to 0.5%, palmitic acid in an amount comprised from 1 to 0.5%, dihydroxystearic acid in an amount comprised from 1 to 0.5% and other compounds in an amount comprised from 0.5% to 0.2%] with 20 moles of ethylene oxide using techniques, apparatus and operating conditions known to the person skilled in the art.

In the context of the present invention and hereinafter we shall make reference in general to "ethoxylated castor oil" to indicate one or more of the ethoxylated castor oils contained in the mixture of the present invention as mentioned above, having a variable number of ethyleneoxy groups, without any limitation, but solely for the purpose of simplifying the present description.

Therefore, the mixture of the present invention comprises or, alternatively, consists of "an ethoxylated castor oil", vegetable oleins and glycols. In one embodiment, said ethoxylated castor oil is represented by the additive E484 - EU Reg. 1831/2003.

Polyethylene glycol esters of fatty acids obtained from soybean oil, used in the mixture of the present invention, are surfactant compounds or emulsifiers included in the list of authorized animal feed additives. Polyethylene glycol esters of fatty acids obtained from soybean oil can be represented by the additive E487 - EU Reg. 1831/2003.

Said polyethylene glycol esters of fatty acids obtained from soybean oil, (additive E487 - EU Reg. 1831/2003) are obtained using techniques and apparatus known to the person skilled in the art.

For example, said polyethylene glycol esters of fatty acids obtained from soybean oil (additive E487 - EU Reg. 1831/2003) can be obtained from soybean oil, for example from soybean oil triglycerides, which are hydrolyzed, using techniques and apparatus known to the person skilled in the art, to yield saturated and/or unsaturated fatty acids of soybean oil. Subsequently, said fatty acids are ethoxylated with ethylene oxide using known techniques and apparatus. Ethylene oxide binds to the carboxyl of the fatty acid to yield the fatty acid obtained from ethoxylated soybean oil.

For example, said polyethylene glycol esters of fatty acids obtained from soybean oil, (additive E487 - EU Reg. 1831/2003) can be obtained from the reaction between a polyethylene glycol - indicated as PEG for the sake of brevity [CAS number 25322-68-3; structural formula HOCH₂-(CH₂-O-CH₂)₍ₙ₋₁₎-CH₂OH or H-(OCH₂-CH₂)ₙ-OH; molecular weight comprised, for example, from 100 to 10000] with the fatty acids obtained from soybean oil or with soybean oil fats or triglycerides using techniques, apparatus and operating conditions known to the person skilled in the art.

By fatty acids obtained from soybean oil we mean one or more fatty acids obtained (for example by hydrolysis) using techniques, apparatus and operating conditions known to the person skilled in the art.

Polyethylene glycol (PEG) can have a molecular weight comprised from 200 to 5000; preferably, the polyethylene glycol has a molecular weight comprised from 300 to 4000; even more preferably from 400 to 3500.

In one embodiment, the polyethylene glycol has a molecular weight comprised from 500 to 1500. In another embodiment, the polyethylene glycol has a molecular weight comprised from 600 to 1000, for example from 700 to 900.

Soybean oil (100 g) generally has the following composition: approximately 16 g of saturated fats, approximately 23 g of monounsaturated fats, approximately 58 g of polyunsaturated fats and approximately 3% of other compounds.

In general, from a soybean oil, preferably a refined soybean oil, the following fatty acids are obtained:
- alpha-linolenic acid (C-18:3) - CAS number 463-40-1, approximately 5 to 10%;
- linoleic acid (C-18:2) - CAS number 60-33-3, approximately 50 to 60%;
- oleic acid (C-18:1) - CAS number 112-80-1, approximately 18 to 25%;
- stearic acid - CAS number 57-11-4, approximately 3 to 6%;
- palmitic acid - CAS number 57-10-3, approximately 8 to 12%.

The polyethylene glycol esters of fatty acids obtained from the soybean oil of the present invention (additive E487 - EU Reg. No. 1831/2003) can be in the form, for example, of monoesters or diesters or mixtures thereof.

For example, the polyethylene glycol PEG has been reacted with a fatty acid obtained from soybean oil in a molar ratio of 1:1, or with a mixture of fatty acids obtained from soybean oil in a molar ratio of 1:1, to yield monoesters.

For example, the polyethylene glycol PEG has been reacted with a fatty acid obtained from soybean oil in a molar ratio of 1:2, or with a mixture of fatty acids obtained from soybean oil in a molar ratio of 1:2, to yield diesters.

Alternatively, in the context of the present invention, the polyethylene glycol esters of fatty acids obtained from soybean oil can be obtained by subjecting the soybean oil fatty acids and/or soybean oil fats or triglycerides to an ethoxylation process with ethylene oxide using the techniques, apparatus and operating conditions known to the person skilled in the art.

In the context of the present invention and hereinafter we shall make reference in general to "polyethylene glycol esters of fatty acids obtained from soybean oil" to indicate one or more of said esters, contained in the mixture of the present invention as mentioned above, having a polyethylene glycol PEG with a variable molecular weight and a variable composition of soybean oil fatty acids, without any limitation, but solely for the purpose of simplifying the present description.

Therefore, the mixture of the present invention comprises or, alternatively, consists of "polyethylene glycol esters of fatty acids obtained from soybean oil", vegetable oleins and glycols. In one embodiment, said polyethylene glycol esters of fatty acids obtained from soybean oil are represented by the additive E487 - EU Reg. 1831/2003.

Alternatively, the mixture of the present invention comprises or, alternatively, consists of "an ethoxylated castor oil" and of "polyethylene glycol esters of fatty acids obtained from soybean oil", vegetable oleins and glycols. In one embodiment, said ethoxylated castor oil is represented by the additive E484 - EU Reg. 1831/2003 and said polyethylene glycol esters of fatty acids obtained from soybean oil are represented by the additive E487 - EU Reg. 1831/2003.

The polyethylene glycol component, contained in said "polyethylene glycol esters of fatty acids obtained from soybean oil", has a molecular weight comprised from 100 to 1000 and the fatty acid component contained in the soybean oil fatty acid is alpha-linolenic acid (C-18:3) - CAS number 463-40-1, or linoleic acid (C-18:2) - CAS number 60-33-3, or oleic acid (C-18:1) - CAS number 112-80-1, or stearic acid - CAS number 57-11-4, or palmitic acid - CAS number 57-10-3 or mixtures thereof; in particular the soybean oil fatty acid selected can be a mixture of alpha-linolenic acid and/or linoleic acid and/or oleic acid in a ratio by weight of 1:1:1 or 1:1:2 or 1:2:1 or 1:2:2.

The vegetable olein or vegetable oleins, contained in the mixture of the present invention, are selected from the group comprising or, alternatively, consisting of oleic acid, linoleic acid, linolenic acid, a triglyceride of oleic acid [(C₁₇H₃₃COO)₃C₃H₅] (also known as triolein) and a vegetable oil or mixtures thereof.

The vegetable oil, contained in the mixture of the present invention, can be selected from the group comprising or, alternatively, consisting of olive oil, linseed oil, rapeseed oil, peanut oil, corn oil, palm oil, sunflower oil and/or soybean oil. The mixture of the present invention can comprise or, alternatively, consist of an olive oil and/or of a palm oil.

Said at least one vegetable olein or vegetable oleins, contained in the mixture of the present invention, comprise (amount by weight relative to the total weight of the vegetable olein) or, alternatively, consist of an oleic acid (C18:1) in an amount comprised from 70 to 99% by weight, relative to the total weight of the vegetable olein, and/or a linoleic acid (C18:2) in an amount comprised from 30 to 1% by weight, relative to the total weight of the vegetable olein.

Said at least one vegetable olein or vegetable oleins, contained in the mixture of the present invention, comprise (amount by weight relative to the total weight of the vegetable olein) or, alternatively, consist of an oleic acid or bidistilled oleic acid (C18:1) in an amount comprised from 75 to 90% by weight, relative to the total weight of the vegetable olein; preferably from 80 to 85% by weight, relative to the total weight of the vegetable olein, and/or a linoleic acid (C18:2) in an amount comprised from 25% to 10% by weight, relative to the total weight of the vegetable olein; preferably an oleic acid in an amount comprised from 80 to 85% by weight, relative to the total weight of the vegetable olein, and/or a linoleic acid in an amount comprised from 20% to 15% by weight, relative to the total weight of the vegetable olein.

Said at least one vegetable olein or vegetable oleins, contained in the mixture of the present invention as described above, can further comprise some saturated fatty acids with a number of carbon atoms equal to or less than 18 in an amount of less than 15% by weight, preferably in an amount comprised from 5 to 10% by weight.

Said at least one vegetable olein or vegetable oleins, contained in the mixture of the present invention, comprise or, alternatively, consist of a vegetable oil. The vegetable oil can be selected from the group comprising or, alternatively, consisting of olive oil, linseed oil, rapeseed oil, peanut oil, corn oil, palm oil, sunflower oil and/or soybean oil. The mixture of the present invention can comprise or, alternatively, consist of an olive oil and/or a palm oil.

In one embodiment, said at least one vegetable olein or vegetable oleins, contained in the mixture of the present invention, comprise or, alternatively, consist of a vegetable oil and an oleic acid in a ratio by weight comprised from 1:3 to 3:1, preferably from 1:2 to 2:1, even more preferably in a 1:1 ratio by weight. Preferably, the oleic acid is selected from products having an oleic acid concentration in greater than 70% by weight, preferably greater than 90% by weight.

The palm olein can have a composition of the type: C12:0=2-3%, C14:0=0.5-1%, C16:0=4-5%, C18:0=2-3%, C18:1=70-80%, C18:2=10-15%, other substances approximately 1%.

The sunflower olein can have a composition of the type: C16:0=5-15%, C18:0=2-8%, C18:1=20-35%, C18:2=45-70%, C18:3=0-7%.

In one embodiment, another vegetable olein can have the following composition: acids with a number of carbon atoms equal to or less than C14=2-3%, C16:0=4-5%, C18:0=1-2%, C18:1=75-80%, C18:2=10-11%.

In one embodiment, another vegetable olein can have the following composition: C18:0=less than 15%, C18:1=greater than 75%, C18:2=less than 1 5%, and other substances less than 1%.

The determination of the fatty acid composition by gas chromatography can be carried out using the method NGD C 42-76, whereas the determination of the triglycerides in the vegetable oils by high-resolution chromatography (HPLC) can be carried out using the method NGD C 45-91:22024 (1992).

In the context of the present invention and hereinafter we shall make reference in general to "olein or oleins" to indicate one or more of the above-mentioned vegetable oleins contained in the mixture of the present invention, without any limitation, but solely for the purpose of simplifying the present description.

The glycols contained in the mixture of the present invention are selected from nontoxic glycols acceptable in animal nutrition. In one embodiment, the glycols are selected from propylene glycols or 1,2-propanediol. The glycols are present in the mixture of the present invention in an amount comprised from 2% to 25% by weight, preferably from 5% to 20% by weight; even more preferably from 10% to 15% by weight, relative to the total weight of the mixture; advantageously, 10% by weight.

Advantageously, the presence of glycols in the mixture of the present invention lowers the freezing point thereof, maintaining it in a liquid state and thereby enabling the mixture to be used also at temperatures below 0°C (zero), preferably at temperatures comprised from 0°C to minus 20°C (-20°C).

The present invention relates to a mixture (A) comprising or, alternatively, consisting, of:
(i) an ethoxylated castor oil containing from 8 to 200 ethyleneoxy groups -additive E484, and/or polyethylene glycol esters of fatty acids obtained from soybean oil -additive E487, and
(ii) vegetable oleins selected from the group comprising or, alternatively, consisting of an oleic acid (or bidistilled oleic acid), linoleic acid, linolenic acid, a triglyceride of oleic acid and a vegetable oil or mixtures thereof, and
(iii) a 1,2-propanediot glycol.

Preferably, in said mixture (A) said 1,2-propanediol glycol is present in an amount comprised from 2 to 25% by weight, preferably from 5 to 20% by weight; even more preferably from 10 to 15% by weight, relative to the total weight of the mixture; advantageously, 10% by weight, relative to the total weight of the mixture.

Said mixture (A) comprises an ethoxylated castor oil, wherein: said (i) ethoxylated castor oil contains from 10 to 150 ethyleneoxy groups, preferably, it contains from 20 to 80 ethyleneoxy groups -additive E484; advantageously, the additive E484 contains 20 or 40 ethyleneoxy groups, and/or polyethylene glycol esters of fatty acids obtained from soybean oil -additive E487, and
(ii) vegetable oleins selected from the group comprising or, alternatively, consisting of an oleic acid, linoleic acid, linolenic acid, a triglyceride of oleic acid, a vegetable oil or mixtures thereof; advantageously, the vegetable oleins and
(iii) a 1,2-propanediol glycol.

Preferably, in said mixture (A), said vegetable oleins are selected from the group comprising or, alternatively, consisting of oleic acid, linoleic acid, linolenic acid, triglycerides of oleic acid, vegetable oil or mixtures thereof.

Preferably, in said mixture (A), said vegetable oil is selected from the group comprising or, alternatively, consisting of olive oil, linseed oil, rapeseed oil, peanut oil, corn oil, palm oil, sunflower oil and soybean oil or mixtures thereof; preferably, said vegetable oil comprises or, alternatively, consists of an olive oil and/or a palm oil.

Advantageously, in said mixture (A), said vegetable oleins comprise or, alternatively, consist of an oleic acid in an amount comprised from 70 to 99% by weight, relative to the total weight of the vegetable olein, and/or of a linoleic acid in an amount comprised from 30 to 1% by weight, relative to the total weight of the vegetable olein.

Advantageously, in said mixture (A) said vegetable oleins comprise or, alternatively, consist of an oleic acid in an amount comprised from 75 to 90% by weight, relative to the total weight of the vegetable olein, and/or a linoleic acid in an amount comprised from 25% to 10% by weight, relative to the total weight of the vegetable olein; preferably an oleic acid in an amount comprised from 80 to 85% by weight, relative to the total weight of the vegetable olein and/or a linoleic acid in an amount comprised from 20% to 15% by weight, relative to the total weight of the vegetable olein.

Preferably, in said mixture (A) said vegetable oleins comprise or, alternatively, consist of a vegetable oil, as described above, and an oleic acid and/or a linolenic acid, as described above, in a ratio by weight comprised from 1:3 to 3:1 [vegetable oil:oleic acid and/or linolenic acid], preferably from 1:2 to 2:1 [vegetable oil:oleic acid and/or linolenic acid], even more preferably in a ratio by weight of 1:1 [vegetable oil:oleic acid and/or linolenic acid].

Preferably, in said mixture (A), said mixture comprises said ethoxylated castor oil -additive E484 and/or said polyethylene glycol esters of fatty acids obtained from soybean oil -additive E487 and said vegetable oleins in a ratio by weight comprised from 1:4 to 4:1, preferably from 1:2 to 2:1, even more preferably 1:1.

Advantageously, the mixture (A) comprises or, alternatively, consists of:
- (i) ethoxylated castor oil containing 20 or 40 ethyleneoxy groups -additive E484, in an amount comprised from 40% to 60%, for example 50% by weight, relative to the total weight of the mixture, and
- (ii) vegetable oleins selected from the group comprising or, alternatively, consisting of an oleic acid, linoleic acid, linolenic acid or mixtures thereof, in an amount comprised from 30% to 50%, for example 40% by weight, relative to the total weight of the mixture, and
(iii) a 1,2-propanediol glycol, in an amount comprised from 5% to 15%, for example 10% by weight, relative to the total weight of the mixture.

The present invention relates to an animal feed in solid form containing liquid and/or solid nutritive substances, the latter in the form of powders or granules or pellets or cubes, which comprises said mixture (A), as described above.

The Applicant has found that using an ethoxylated castor oil, as a technological and nutritional additive, as described above, and/or polyethylene glycol esters of fatty acids obtained from soybean oil, as described above, in association or in admixture with said at least one vegetable olein or vegetable oleins selected from the group comprising or, alternatively, consisting of oleic acid, linoleic acid, linolenic acid, a triglyceride of oleic acid and a vegetable oil or mixtures thereof, and 1,2-propanediol in a process for preparing an animal feed containing nutritive substances in liquid and/or solid, powder or granular form or other liquid or solid components of the animal feed makes it possible to obtain the following advantages:
(i) to increase the output in tons per hour in plants that produce animal feeds in solid form, for example in the form of cubes or pellets or granules;
(ii) to improve the pellet durability index (PDI);
(iii) to reduce the consumption of electricity expressed in amperes per hour;
(iv) to reduce the amount of dust that is produced and found in the animal feed in solid form, for example in the form of cubes or pellets or granules, obtaining a highly palatable and digestible feed;
(v) to assure less wear on equipment and the possibility of better controlling the production T°C;
(vi) to stabilize the water content of the feed during the phases of preparation thereof.
(vii) to assure optimal nutritional characteristics of the feed, which are reflected, for example, in terms of an increase or gain in body weight and/or an improved feed conversion rate.

The present invention also relates to an animal feed, preferably a dry feed in the form of cubes or pellets or granules or powders.

In one embodiment, said feed contains liquid and/or solid nutritive substances, the latter in the form of powders or in granules, in addition to the mixture of the present invention which comprises an ethoxylated castor oil and/or the polyethylene glycol esters of fatty acids obtained from soybean oil, as described above, in association with the vegetable oleins as described above and 1,2-propanediol as described above.

In the context of the present invention, animal feed means, by way of non-restrictive example, a feed for pigs, fish, poultry species, e.g. chickens and turkeys, and ruminants, e.g. cattle and calves, at any stage of growth.

The present invention also relates to a process for preparing said feed.

In the production of the animal feed, said ethoxylated castor oil and/or the polyethylene glycol esters of fatty acids obtained from soybean oil, having the characteristics as described above, said at least one vegetable olein, having the characteristics as described above, and the glycol, preferably 1,2-propanediol, can be suitably mixed together to form a single product or, alternatively, they can be used in a separate manner.

In a preferred embodiment, the vegetable olein is selected from an oleic acid, said oleic acid preferably being present at a concentration greater than 70% by weight; or a mixture of oleic acid and linoleic acid, said mixture preferably comprising said oleic acid at a concentration equal to or greater than 75% by weight and said linoleic acid at a concentration equal to or less than 25% by weight; or a vegetable oil, said vegetable oil preferably being selected from the group comprising or, alternatively, consisting of olive oil, linseed oil, rapeseed oil, peanut oil, corn oil, palm oil, sunflower oil and soybean oil or mixtures thereof. Preferably, it is olive and/or palm oil. Advantageously, it is palm oil.

If the ethoxylated castor oil and/or the polyethylene glycol esters of fatty acids obtained from soybean oil or the vegetable oleins are in a solid state at room temperature (T 20°C and pressure of 1 atmosphere) due to their high molecular weight, a preliminary heating step is envisaged in order to turn the two compounds into a liquid state.

The ethoxylated castor oil and/or the polyethylene glycol esters of fatty acids obtained from soybean oil and/or the vegetable oleins and/or the 1,2-propanediol (first mixed together or, alternatively, kept separate) can be directly added to the liquid and/or solid nutritive substances in powder or granular form or supplemented with the other solid components of the animal feed or with a mixture of two or more of said nutritive substances.

Alternatively, the ethoxylated castor oil and/or the polyethylene glycol esters of fatty acids obtained from soybean oil and/or the vegetable oleins and/or the 1,2-propanediol (first mixed together or, alternatively, kept separate) can optionally be dissolved or suspended in water and/or applied on a substrate or carrier or added to a liquid and/or solid vehicle, before being added to the liquid and/or solid nutritive substances in powder or granular form or supplemented with the other solid components of the animal feed or with a mixture of two or more of said nutritive substances.

The present invention relates to a process for preparing an animal feed in solid form, wherein said process comprises at least a step in which the mixture of the present invention is directly or indirectly added, in the latter case after being first dissolved or suspended in water or added to a carrier, to the liquid and/or solid nutritive substances in powder or granular form or optionally other liquid or solid components of the animal feed.

In a preferred embodiment, the animal feed can contain a hydrophobic component of animal or vegetable origin, in liquid or solid form at room temperature (T 20°C and pressure of 1 atmosphere), said hydrophobic component being selected from the group comprising animal and/or vegetable lipids, animal and/or vegetable oils and animal and/or vegetable fats; it is preferably an animal fat.

In a first case, said hydrophobic component first has the ethoxylated castor oil and/or polyethylene glycol esters of fatty acids obtained from soybean oil and/or the vegetable oleins and/or 1,2-propanediol (first mixed together or, alternatively, kept separate) added to it and then the nutritive substances in liquid, powder or granular form or other solid components of the animal feed or a mixture of two or more of these components.

In a second case, said hydrophobic component first has the nutritive substances in liquid, powder or granular form or other solid components of the animal feed or a mixture of two or more of these components added to it and then the ethoxylated castor oil and/or polyethylene glycol esters of fatty acids obtained from soybean oil and/or the vegetable oleins and/or 1,2-propanediol (first mixed together or, alternatively, kept separate).

In another embodiment the ethoxylated castor oil and/or polyethylene glycol esters of fatty acids obtained from soybean oil and/or the vegetable oleins and/or 1,2-propanediol (first mixed together or, alternatively, kept separate) can be directly added to a hydrophobic component that is liquid or solid at room temperature, such as, for example, an animal and/or vegetable lipid, an oil, preferably a vegetable oil, or a liquid and/or solid fat, preferably an animal fat.

In another preferred embodiment, said hydrophobic component in a liquid state (or, if solid, after a step of heating to render it liquid) can be added, for example, to said components in liquid or solid, granular or powder form, or part of them, in order to produce a solid powdery or granular mixture before adding the ethoxylated castor oil and/or polyethylene glycol esters of fatty acids obtained from soybean oil and/or of the vegetable oleins and the 1,2-propanediol.

The present invention relates to a process for preparing a feed in a solid state, wherein said process comprises at least a step in which the mixture of the present invention is added to a hydrophobic component of animal or vegetable origin that is liquid or solid at room temperature, said hydrophobic component being selected from the group comprising animal and/or vegetable lipids, animal and/or vegetable oils and animal and/or vegetable fats, preferably an animal fat, and then the liquid and/or solid nutritive substances in powder or granular form or optionally other liquid or solid components of the animal feed are added.

If a mixture comprising ethoxylated castor oil, said at least one olein and the 1,2-propanediol is used (but the same thing also applies if said polyethylene glycol esters of fatty acids obtained from soybean oil, said at least one olein and the 1,2-propanediol are used), the industrial preparation of an animal feed entails preparing a premixture containing macro elements, such as, for example, soybeans, corn, animal or vegetable meals/flours, and micro elements such as, for example, minerals, vitamins, flavourings and other substances commonly used by the person skilled in the art. Depending on the type of feed, other components can also be added to the premixture, namely, cereals, barley, oats and rice, vegetable proteins, for example proteins obtained from soybeans or sunflowers, or other proteins commonly used by the person skilled in the art. The premixture subsequently has the mixture of the present invention comprising the ethoxylated castor oil and/or vegetable oleins and 1,2-propanediol (first mixed together or, alternatively, kept separate) added to it. For example, the ethoxylated castor oil, said at least one olein and the 1,2-propanediol can be optionally dissolved or suspended in water and/or applied on a substrate or carrier or added to a liquid and/or solid vehicle, such as, for example macro elements such as cereals, starch or micro elements such as minerals and vitamins. Subsequently, the hydrophobic component in a liquid state can be added to said premixture. If said hydrophobic component is in a solid state at room temperature, a heating step is envisaged.

The hydrophobic component which is liquid or solid at room temperature can be, for example, an animal and/or vegetable lipid, an oil, preferably a vegetable oil, or a liquid and/or solid fat, preferably an animal fat. After complete mixing, a composition is obtained whose consistency will depend on the physical state and amounts used of the individual components.

In a preferred embodiment, the animal feed of the present invention can comprise said ethoxylated castor oil and said at least one olein in a ratio by weight comprised from 1:4 to 4:1, preferably from 1:2 to 2:1, even more preferably 1:1. In a preferred embodiment, the animal feed of the present invention can comprise said ethoxylated castor oil, said at least one olein and 1,2-propanediol in a ratio by weight comprised from 1:4:0.22 to 4:1:0.88, preferably from 1:2:0.22 to 2:1:0.44, even more preferably 1:1:0.22.

In a preferred embodiment, the animal feed of the present invention can comprise said polyethylene glycol esters of fatty acids obtained from soybean oil and said at least one olein in a ratio by weight comprised from 1:4 to 4:1, preferably from 1:2 to 2:1, even more preferably 1:1.

In a preferred embodiment, the animal feed of the present invention can comprise said polyethylene glycol esters of fatty acids obtained from soybean oil, said at least one olein and 1,2-propanediol in a ratio by weight comprised from 1:4:0.22 to 4:1:0.88, preferably from 1:2:0.22 to 2:1:0.44, even more preferably 1:1:0.22.

The animal feed of the present invention can comprise said ethoxylated castor oil and/or said polyethylene glycol esters of fatty acids obtained from soybean oil in an amount comprised from 0.1 Kg to 1 Kg/ton of feed, preferably from 0.4 to 0.8 Kg/ton of feed. Advantageously, 0.5 Kg/ton of feed (0.05%). The animal feed of the present invention can comprise said at least one olein in an amount comprised from 3 Kg to 10 Kg/ton of feed, preferably from 5 Kg to 8 Kg/ton of feed. The animal feed of the present invention can comprise a hydrophobic component as described above in an amount comprised from 1 to 12 Kg/100 Kg of feed, preferably 10 Kg/100 Kg of feed. The animal feed of the present invention can comprise water in an amount comprised from 0.5 Kg to 1 Kg/100 Kg of feed.

The animal feed of the present invention can be subjected to a pelleting or extrusion step to yield a feed with variable dimensions typical of animal feeds in pellet or granular form.

The present invention relates to the use of a mixture comprising or, alternatively, consisting of:
(i) an ethoxylated castor oil containing from 8 to 200 ethyleneoxy groups, and/or
(ii) polyethylene glycol esters of fatty acids obtained from soybean oil,
in association with at least one vegetable olein selected from the group comprising or, alternatively, consisting of an oleic acid, linoleic acid, linolenic acid, a triglyceride of oleic acid and a vegetable oil or mixtures thereof and (iii) 1,2-propanediol in a process for preparing an animal feed containing nutritive substances in liquid, powder or granular form.

Preferably, said mixture comprises or, alternatively, consists of:
(i) an ethoxylated castor oil E484, and/or
(ii) polyethylene glycol esters of fatty acids obtained from soybean oil E487, in association with said at least one vegetable olein and 1,2-propanediol.

Preferably, said ethoxylated castor oil contains from 10 to 150 ethyleneoxy groups; preferably, it contains from 20 to 80 ethyleneoxy groups.

Preferably, said vegetable olein is selected from:
- an oleic acid; preferably, preferably said oleic acid has a concentration greater than 70% by weight; or
- a mixture of oleic acid and linoleic acid; preferably said mixture comprises said oleic acid at a concentration equal to or greater than 75% by weight and said linoleic acid at a concentration equal to or less than 25% by weight; or
- a vegetable oil selected from the group comprising or, alternatively, consisting of olive oil, linseed oil, rapeseed oil, peanut oil, corn oil, palm oil, sunflower oil and soybean oil or mixtures thereof; preferably, it is olive and/or palm oil.

Preferably, said ethoxylated castor oil and said vegetable olein are used in a ratio by weight comprised from 1:4 to 4:1, preferably from 1:2 to 2:1, even more preferably 1:1.

Preferably, said ethoxylated castor oil, said at least one olein and 1,2-propanediol are used in a ratio by weight comprised from 1:4:0.20 to 4:1:1, preferably from 1:2:0.20 to 2:1:0.50, even more preferably 1:1:0.20. Preferably, said ethoxylated castor oil is used in an amount comprised from 0.4 to 0.8 Kg/ton of feed, preferably in an amount of 0.5 Kg/ton of feed; and - said vegetable olein is used in an amount comprised from 3 Kg to 10 Kg/ton of feed, preferably 5 Kg to 8 Kg/ton of feed.

The present invention relates to an animal feed containing nutritive substances in liquid, powder or granular form, characterized in that it comprises an ethoxylated castor oil containing from 8 to 200 ethyleneoxy groups and/or polyethylene glycol esters of fatty acids obtained from soybean oil, in association with at least one vegetable olein selected from the group comprising or, alternatively, consisting of oleic acid, linoleic acid, linolenic acid, a triglyceride of oleic acid and a vegetable oil or mixtures thereof and 1,2-propanediol.

Preferably, in said feed said ethoxylated castor oil and/or said polyethylene glycol esters of fatty acids obtained from soybean oil, said vegetable olein and 1,2-propanediol are selected in accordance with one of the above-described embodiments.

The present invention relates to a process for preparing an animal feed, as described above, said process being characterized in that it comprises a step in which a mixture comprising or, alternatively, consisting of:
(i) an ethoxylated castor oil containing from 8 to 200 ethyleneoxy groups, and/or polyethylene glycol esters of fatty acids obtained from soybean oil, and (ii) at least one vegetable olein selected from the group comprising or, alternatively, consisting of an oleic acid, linoleic acid, linolenic acid, a triglyceride of oleic acid and a vegetable oil or mixtures thereof, and (iii) the 1,2-propanediol are added directly, or after being first dissolved in water or suspended in water or added to a carrier, into the nutritive substances in liquid, powder or granular form or optionally into other solid components of the animal feed.

Preferably, in said process said ethoxylated castor oil and/or said polyethylene glycol esters of fatty acids obtained from soybean oil, said vegetable olein and 1,2-propanediol are selected in accordance with at least one of the above-described embodiments and can be added, separately from each other or after first being mixed, to the nutritive substances in liquid, powder or granular form.

Preferably, in said process said ethoxylated castor oil, (ii) said at least one vegetable olein and (iii) the 1,2-propanediol can be added, after first being mixed to yield a mixture, to the nutritive substances in liquid, powder or granular form or optionally into other solid components of the animal feed.

Preferably, in said process said ethoxylated castor oil containing from 8 to 200 ethyleneoxy groups and/or said polyethylene glycol esters of fatty acids obtained from soybean oil, said at least one vegetable olein and 1,2-propanediol can be added, separately from each other or after first being mixed, to a hydrophobic component that is liquid or solid at room temperature, selected from the group comprising an animal and/or vegetable lipid, an oil, preferably a vegetable oil, and a liquid and/or solid fat, preferably an animal fat.

The present invention will now be described with the aid of several experimental trials (Tables 1; 2.1; 2.2; 3.1; 3.2) which are described solely for illustrative purposes and therefore do not limit the scope of the present invention.

### TRIAL 1: Preparation of a chicken feed

**Feed 1:** Control feed based on soy and corn, without an emulsifier.
**Feed 2:** Feed based on soy and corn + emulsifier based on ethoxylated castor oil 20 moles E484 in an amount equal to 0.05% by weight (500 g/ton of feed), relative to the total weight of the feed.
Feed 3: Feed based on soy and corn + mixture of the present invention in an amount equal to 0.05% by weight (500 g/ton of feed), comprising 45% by weight of ethoxylated castor oil 20 moles E484, 45% by weight of vegetable oleins (oleic acid approximately 70% and linoleic acid approximately 30%) and 10% by weight of 1,2-propanediol.

**Table 1: average values of 20 feed samples of 1000 Kg**

| **Parameter Measured** | **Feed 1** | **Feed 2** | **Feed 3** |
|---|---|---|---|
| Hourly output (tons/h) | 22 | 24 | 31 |
| Energy consumption (Amperes) | 420 | 410 | 415 |
| Extrusion temperature (°C) | 75 | 80 | 85 |

| Water content (%) | | | |
|---|---|---|---|
| - Mixer Moisture | 11.80 | 11.90 | 12.01 |
| - Conditioner Moisture | 13.95 | 15.25 | 16.02 |
| - Cooled Moisture | 10.50 | 11.20 | 12.05 |
| Free water (Aw) | 0.61 | 0.63 | 0.61 |
| Durability index (PDI) | 91 | 92 | 94 |
| Dust content (%) | 5-10 | 6 | 3 |
| Water (%) | - | 1 | 1 |

The Applicant also tested the following mixtures of the present invention, obtaining positive results of an entity comparable to those obtained with feed 3:
**Feed 4:** Feed based on soy and corn + mixture of the present invention in an amount equal to 0.05% by weight (500 g/ton of feed), comprising 40% by weight of ethoxylated castor oil 40 moles E484, 45% by weight of vegetable oleins comprising approximately 80% oleic acid and approximately 20% linoleic acid, and 15% by weight of 1,2-propanediol.
**Feed 5:** Feed based on soy and corn + mixture of the present invention in an amount equal to 0.05% by weight (500 g/ton of feed), comprising 45% by weight of ethoxylated castor oil 20 moles E484, 45% by weight of vegetable oleins comprising approximately 70% oleic acid, approximately 30% linoleic acid and palm oil, in an acid:oil ratio by weight=2:1 and 10% by weight of 1,2-propanediol.
**Feed 6:** Feed based on soy and corn + mixture of the present invention in an amount equal to 0.05% by weight (500 g/ton of feed), comprising 40% by weight of ethoxylated castor oil 40 moles E484, 45% by weight of vegetable oleins comprising approximately 80% oleic acid, approximately 20% linoleic acid and soybean oil, in an acid:oil ratio by weight=1.5:1 and 15% by weight of 1,2-propanediol.
**Feed 7:** Feed based on soy and corn + mixture of the present invention in an amount equal to 0.08% by weight (800 g/ton of feed), comprising 40% by weight of polyethylene glycol esters of fatty acids obtained from soybean oil E487, 50% by weight of vegetable oleins (approximately 70% oleic acid and approximately 30% linoleic acid) and 10% by weight of 1,2-propanediol.

### TRIAL 2: Preparation of a feed for ruminants (calves and sheep)

**Feed A**: Control feed based on meals/flours, soy and corn, without an emulsifier.
**Feed B**: Feed based on meals/flours, soy and corn + mixture of the present invention, comprising 40% by weight of ethoxylated castor oil 20 moles E484, 40% by weight of vegetable oleins based on oleic acid (at least 70%) and 10% by weight of 1,2-propanediol.

**Table 2.1 (Calves): average values of 20 feed samples of 1000 Kg**

| **Parameter Measured** | **Feed A** | **Feed B** |
|---|---|---|
| Hourly output (tons/h) | 10 | 14.5 |
| Energy consumption (Amperes) | 260 | 265 |
| Extrusion temperature (°C) | 64 | 77 |

| Water content (%) | | |
|---|---|---|
| - Mixer Moisture | 12.30 | 12.22 |
| - Conditioner Moisture | 15.10 | 16.47 |
| - Cooled Moisture | 11.70 | 12.80 |
| Free water (Aw) | 0.62 | 0.62 |
| Durability index (PDI) | 97 | 98 |
| Dust content (%) | 4 | 2 |
| Molasses (%) | 4 | 4 |
| Water (%) | - | 1 |

**Table 2.2 (Sheep): average values of 20 feed samples of 1000 Kg**

| **Parameter measured** | **Feed A** | **Feed B** |
|---|---|---|
| Hourly output (tons/h) | 9 | 14 |
| Energy consumption (Amperes) | 280 | 245 |
| Extrusion temperature (°C) | 60 | 77 |

| Water content (%) | | |
|---|---|---|
| - Mixer Moisture | 10.70 | 10.65 |
| - Conditioner Moisture | 13 | 16.10 |
| - Cooled Moisture | 10.50 | 12.70 |
| Free water (Aw) | 0.58 | 0.59 |
| Durability index (PDI) | 95 | 98 |
| Dust content (%) | 7 | 2 |
| Molasses (%) | 2 | 2 |
| Water (%) | - | 2 |

With reference both to calves and sheep, the Applicant also tested the following mixtures of the present invention, obtaining advantageous and positive results of an entity comparable to those obtained with feed B:
**Feed C:** Feed based on meals/flours, soy and corn + mixture of the present invention in an amount equal to 0.05% by weight (500 g/ton of feed), comprising 40% by weight of ethoxylated castor oil 40 moles E484, 45% by weight of vegetable oleins comprising approximately 80% oleic acid and approximately 20% linoleic acid and 15% by weight of 1,2-propanediol.
**Feed D:** Feed based on meals/flours, soy and corn + mixture of the present invention in an amount equal to 0.05% by weight (500 g/ton of feed), comprising 45% by weight of ethoxylated castor oil 20 moles E484, 45% by weight of vegetable oleins comprising approximately 70% oleic acid, approximately 30% linoleic acid and palm oil, in an acid:oil ratio by weight=2:1 and 10% by weight of 1,2-propanediol.

### TRIAL 3: Preparation of a feed for swine (weight up to 30 Kg (piglets) and 90 Kg (pigs)) based on soy and corn

**Feed A:** Control feed based on soy and corn, without emulsifier.
**Feed B:** Feed based on soy and corn + mixture of the present invention, comprising 40% by weight of ethoxylated castor oil 20 moles E484, 40% by weight of vegetable oleins based on oleic acid (at least 70%) and 10% by weight of 1,2-propanediol.

**Table 3.1 (swine weighing up to 30 Kg): average values of 25 feed samples of 1000 Kg**

| **Parameter Measured** | **Feed A** | **Feed B** |
|---|---|---|
| Hourly output (tons/h) | 12 | 15.5 |
| Energy consumption (Amperes) | 240 | 240 |
| Extrusion temperature (°C) | 62 | 81 |

| Water content (%) | | |
|---|---|---|
| - Mixer Moisture | 10.10 | 11.30 |
| - Conditioner Moisture | 12.60 | 14.60 |
| - Cooled Moisture | 9.80 | 11.50 |
| Free water (Aw) | 0.58 | 0.58 |
| Durability index (PDI) | 95 | 98 |
| Dust content (%) | 8 | 4 |
| Water (%) | - | 1 |

**Table 3.2 (swine weighing up to 90 kg): average values of 25 feed samples of 1000 Kg**

| **Parameter measured** | **Feed A** | **Feed B** |
|---|---|---|
| Hourly output (tons/h) | 14 | 17.50 |
| Energy consumption (Amperes) | 270 | 270 |
| Extrusion temperature (°C) | 71 | 80 |

| Water content (%) | | |
|---|---|---|
| - Mixer Moisture | 11.60 | 12.70 |
| - Conditioner Moisture | 14.00 | 15.40 |
| - Cooled Moisture | 11.00 | 12.20 |
| Free water (Aw) | 0.61 | 0.60 |
| Durability index (PDI) | 92 | 97 |
| Dust content (%) | 10 | 3 |
| Water (%) | - | 1.3 |

With reference to swine having a weight of up to 30 Kg and 90 Kg, the Applicant also tested the following mixtures of the present invention, obtaining advantageous and positive results of an entity comparable to those obtained with feed B:
**Feed C:** Feed based on meals/flours, soy and corn + mixture of the present invention in an amount equal to 0.05% by weight (500 g/ton of feed), comprising 40% by weight of ethoxylated castor oil 40 moles E484, 45% by weight of vegetable oleins comprising approximately 80% oleic acid and approximately 20% linoleic acid and 15% by weight of 1,2-propanediol.
**Feed D:** Feed based on meals/flours, soy and corn + mixture of the present invention in an amount equal to 0.05% by weight (500 g/ton of feed), comprising 45% by weight of ethoxylated castor oil 20 moles E484, 45% by weight of vegetable oleins comprising approximately 70% oleic acid, approximately 30% linoleic acid and palm oil, in an acid:oil ratio by weight=2:1 and 10% by weight of 1,2-propanediol.

The Applicant conducted some *in vivo* tests to determine the nutritional characteristics of a feed prepared in accordance with the present invention with reference to the growth performance of broiler chicks and with reference to the slaughtering yield of broiler chicks.

### TRIAL 4: In vivo trials conducted on broiler chicks

The *in vivo* trials were conducted with the aim of evaluating the effect of a mixture (A) of the present invention used to prepare a chicken feed on the growth performance and carcass characteristics of the tested chicks. The tested mixture A1 was based on:
- (i) ethoxylated castor oil containing 20 ethyleneoxy groups -additive E484, in an amount equal to 50% by weight, relative to the total weight of the mixture, and
- (ii) vegetable olein comprising bidistilled oleic acid, in an amount equal to 40% by weight, relative to the total weight of the mixture, and
(iii) a 1,2-propanediol glycol, in an amount equal to 10% by weight, relative to the total weight of the mixture.

The trials were conducted at the "Polo Veterinario, Ulniversitäà of the Studi of Milano" (Lodi, Italy) in the year 2014.

### Materials and Methods

Trials were conducted on a total of 600 one-day-old male broiler chicks (ROSS 308) in a random fashion on two groups of 300 chicks each, a first group of 300 chicks (control group) and a second group of 300 chicks (treatment group). All 600 chicks were allocated to 15 cages with 20 chicks per cage, for each of the two treatment groups. Two diets were used: a first diet for the control group CTR corresponding to the basic diet and a second diet for the treatment group CTR+AMT corresponding to the basic diet + the mixture A1. All chicks were slaughtered at 44 days of age (44d). The feeds were prepared by a leading Italian manufacturer of chicken feeds in accordance with the specific guidelines for the ROSS 308 type. The feed was prepared in crumbled form for the starter and grower phases and in pellet form for the finisher phase.

**Table 4.1**

| 600 male ROSS 308 broiler chicks -day zero (0d) | |
|---|---|
| Control group CTR: 15 cages with 20 chicks | Treatment group CTR+AMT: 15 cages with 20 chicks |

**Table 4.2**

| Trial | | | |
|---|---|---|---|
| Treatment | CTR+AMT | | |
| | Pre-starter phase 0-12 days | Starter phase 12-22 days | Grower/Finisher phase 22-44 days |
| Control CTR | - | - | - |
| Mixture A1 (liquid product) | 1000 g/ton | 750 g/ton | 500 g/ton |
| 2 treated groups: CTR and CTR+AMT | 300 chicks per treatment | | |
| | Total of 600 chicks treated | | |
| no. of replicates per treatment | 15 cages | | |

**Table 4.3**

| Analysis of basal diet (%) | | | |
|---|---|---|---|
| % | Prestarter 0-12 days | Starter 12-22 days | Grower/Finisher 22-44 days |
| Crude protein | 21.80 | 20.20 | 19.00 |
| Crude fat | 5.20 | 6.70 | 8.20 |
| Crude fibre | 2.80 | 3.00 | 2.70 |
| Dust | 5.60 | 5.00 | 4.50 |
| Calcium | 0.92 | 0.80 | 0.70 |
| Phosphorous (P) | 0.65 | 0.60 | 0.54 |
| Sodium (Na) | 0.17 | 0.15 | 0.12 |
| Methionine | 0.62 | 0.58 | 0.48 |
| Lysine | 1.32 | 1.22 | 1.12 |

### i) Evaluation of the increased carcass yield at slaughtering.

**Table 4.4**

| | CTR | CTR+AMT |
|---|---|---|
| No. of chicks | 15 | 15 |
| Dressing, % | 75.14(b) | 76.09(a) |
| Breast muscle, % | 31.96 | 32.67 |

| | | |
|---|---|---|
| Note: (a) and (b: P<0.05 | | |

### ii) Body weight -BW

**Table 4.5**

| | BW, grams | Days (d) |
|---|---|---|
| CTR | 40.89 | 0 |
| CTR+AMT | 40.97 | 0 |
| CTR | 378.0(*) | 12 |
| CTR+AMT | 378.6(*) | 12 |
| CTR | 1070 | 22 |
| CTR+AMT | 1092 | 22 |
| CTR | 3411 (P=0.12) | 44 |
| CTR+AMT | 3475 (P=0.12) | 44 |

| | | |
|---|---|---|
| Note: (*) P<0.05 | | |

The above data show that an increase in body weight BW of 0.064 Kg was obtained, given by (3475 Kg average CTR+AMT) - (3411 Kg average CTR).

### iii) Effects of AMT (Mixture A1) on growth performance

**Performance:** the chicks were weighed at zero days (0 d), twelve days days (12 d), twenty-two days (22 d) and forty-four days (44 d). The feed intake per cage was monitored daily. The performance parameters (daily weight gain, feed intake and feed efficiency) were determined for each cage. The number and weight of the chicks in each cage was monitored.

**Mortality:** It was recorded daily and the percentage of mortality was calculated.

**Carcasses:** The carcass weight and breast muscle weight were determined in a representative number of chicks at the time of slaughter.

The result of this study demonstrated that the diet CTR+AMT (Mixture A1) increased the body weight BW and feed conversion rate -FCR. Moreover, the use of AMT (Mixture A1) led to a higher dressing % versus the CTR.

**Table 4.6**

| | FCR | Days (d) |
|---|---|---|
| CTR | 1.149 | 0 - 12 |
| CTR+AMT | 1.133 | 0 - 12 |
| CTR | 1.335 | 12 - 22 |
| CTR+AMT | 1.340 | 12 - 22 |
| CTR | 1.700(*) | 22 - 44 |
| CTR+AMT | 1.699(*) | 22 - 44 |
| CTR | 1.570(*) | 0 - 44 |
| CTR+AMT | 1.547(*) | 0 - 44 |

| | | |
|---|---|---|
| Note: (*) P<0.05 | | |

The result of this study demonstrated that for a male chicken weighing 3.4 kg we have 3.4 kg x 1.570 = 5.338 kg (feed consumption CTR), whereas for a 3.4 kg chicken belonging to group CTR+AMT we have 3.4 kg x 1.547 = 5.259 kg (feed consumption CTR+AMT). The difference between the two results points to savings (efficiency) in the diet of 0.079 kg/chicken.

Similar trials conducted on 400 chicks using mixtures A2 and A3, described here below, led to similar results, comparable to those obtained with mixture A1.

Mixture A2: (i) ethoxylated castor oil containing 40 ethyleneoxy groups -additive E484, in an amount equal to 40% by weight, relative to the total weight of the mixture, (ii) vegetable olein comprising bidistilled oleic acid, in an amount equal to 50% by weight, relative to the total weight of the mixture, and (iii) a 1,2-propanediol glycol, in an amount equal to 10% by weight, relative to the total weight of the mixture.

Mixture A3: (i) ethoxylated castor oil containing 20 ethyleneoxy groups -additive E484, in an amount equal to 50% by weight, relative to the total weight of the mixture, (ii) vegetable olein comprising bidistilled oleic acid and linoleic acid (in a ratio by weight 3:1) in an amount equal to 40% by weight, relative to the total weight of the mixture, and (iii) a 1,2-propanediol glycol, in an amount equal to 10% by weight, relative to the total weight of the mixture.

The Applicant conducted several *in vivo* tests to determine the nutritional characteristics of a feed prepared in accordance with the present invention with reference to the growth performance of weaned piglets.

### TRIAL 5: In vivo trials conducted on weaned piglets

The *in vivo* trials were conducted with the aim of evaluating the effect of a mixture (B) of the present invention used to prepare a feed for weaned piglets on growth performance. The tested mixture B1 was based on:
- (i) ethoxylated castor oil containing 20 ethyleneoxy groups -additive E484, in an amount equal to 50% by weight, relative to the total weight of the mixture, and
- (ii) vegetable olein comprising bidistilled oleic acid, in an amount equal to 40% by weight, relative to the total weight of the mixture, and
(iii) a 1,2-propanediol glycol, in an amount equal to 10% by weight, relative to the total weight of the mixture.

The trials were conducted at the Faculty of Veterinary Medicine of University of Milan (Italy) in the year 2014.

### Materials and Methods

The trials were conducted in a random fashion on a total of 96 24-day-old weaned piglets (Stambo HBI Dalland 40) with a body weight of 8.04 ± 1.32 kg divided into two groups of 48 piglets each: a first group of 48 piglets (control group) and a second group of 48 piglets (treatment group). All 96 piglets were allocated to 12 cages with 4 piglets per cage for each of the two treatment groups. Two diets were used: a first diet for the control group CTR corresponding to the basic diet and a second diet for the treatment group CTR+AMT corresponding to the basic diet + the mixture B1.

The feeds were prepared by a leading Italian manufacturer of pig feeds in accordance with specific industry guidelines.

The composition of the basal diet is shown in Table 5.1.

| | Prestarter 0-14 days | Starter 14-42 days |
|---|---|---|
| % Dry matter | 90.71 | 90.74 |
| % Crude protein | 17.38 | 18.33 |
| % Crude fiber | 5.88 | 5.61 |
| Ether extract 5 | 4.17 | 5.55 |
| % Dust | 3.97 | 3.88 |
| % Calcium | 0.51 | 0.50 |
| % Phosphorous (P) | 0.26 | 0.25 |

The trial on piglets was conducted as shown in Table 5.2.

| Treatment | CTR + AMT (Mixture B1) | |
|---|---|---|
| | Prestarter | Starter |
| | 0-14 days | 14-42 days |
| Control CTR | - | - |
| Mixture B1 (liquid product) | 2000 g/ton | 1500 g/ton |
| 2 groups treated: CTR and CTR+AMT | 48 piglets per treatment | |
| | total of 96 piglets | |
| no. of replicates per treatment: 12 | 2 treatment x 12 cages x 4 piglets | |

The body weight BW was recorded at zero days, 14 days, 28 days and 42 days. The average daily feed intake -ADFI was monitored daily. The average daily gain - ADG in weight and the feed conversion rate - FCR were calculated for each cage. The data collected were analyzed using the program PROC GLM (SAS Inst. Inc., Cary, NC, 2006) with P< 0.05.

### RESULTS

**i) Body weight -BW, Table 5.3.**

| | BW, Kilograms | Days (d) |
|---|---|---|
| CTR | 8.03 | 0 |
| CTR+AMT | 8.05 | 0 |
| CTR | 11.66 | 14 |
| CTR+AMT | 11.96 | 14 |
| CTR | 19.17 | 28 |
| CTR+AMT | 19.87 | 28 |
| CTR | 28.98 | 42 |
| CTR+AMT | 30.40 | 42 |

| | | |
|---|---|---|
| Note: (*) P<0.05 | | |

**ii) Average Daily Gain -ADG, Table 5.4.**

| | ADG, g/days | Days (d) |
|---|---|---|
| CTR | 259 | 0 - 14 |
| CTR+AMT | 279 | 0 - 14 |
| CTR | 536 | 14 - 28 |
| CTR+AMT | 567 | 14 - 28 |
| CTR | 701 (P=0.11) | 28 - 42 |
| CTR+AMT | 752 (P=0.11) | 28 - 42 |
| CTR | 499 (P=0.14) | 0 - 42 |
| CTR+AMT | 532 (P=0.14) | 0 - 42 |

| | | |
|---|---|---|
| Note: (*) P<0.05 | | |

**iii) Average Daily Feed Intake-ADFI), Table 5.5.**

| | ADFI, g/days | Days (d) |
|---|---|---|
| CTR | 358 | 0 - 14 |
| CTR+AMT | 388 | 0 - 14 |
| CTR | 770 | 14 - 28 |
| CTR+AMT | 829 | 14 - 28 |
| CTR | 1131 (*) | 28 - 42 |
| CTR+AMT | 1264(*) | 28 - 42 |
| CTR | 753 (P=0.10) | 0 - 42 |
| CTR+AMT | 827 (P=0.10) | 0 - 42 |

| | | |
|---|---|---|
| Note: (*) P<0.05 | | |

**iv) Feed Conversion Rate-FCR), Table 5.6.**

| | FCR | Days (d) |
|---|---|---|
| CTR | 1.38 | 0 - 14 |
| CTR+AMT | 1.39 | 0 - 14 |
| CTR | 1.44 | 14 - 28 |
| CTR+AMT | 1.46 | 14 - 28 |
| CTR | 1.63 | 28 - 42 |
| CTR+AMT | 1.68 | 28 - 42 |
| CTR | 1.51 | 0 - 42 |
| CTR+AMT | 1.55 | 0 - 42 |

| | | |
|---|---|---|
| Note: (*) P<0.05 | | |

A comparison between the control group CTR and the treatment group CTR + ATM (Mixture B1) in terms of BW ± STD and CV is shown in Table 5.7.

| | BW, Kg | CV, % |
|---|---|---|
| CTR | 28.98 ± 3.53 | 12.18 |
| CTR+AMT | 30.40 ± 2.79 | 9.19 |

## Claims

1. A mixture comprising:
(i) an ethoxylated castor oil containing from 8 to 200 ethyleneoxy groups -additive E484, and/or polyethylene glycol esters of fatty acids obtained from soybean oil -additive E487, and
(ii) vegetable oleins selected from the group comprising or, alternatively, consisting of an oleic acid, linoleic acid, linolenic acid, a triglyceride of oleic acid, a vegetable oil or mixtures thereof, and
(iii) a 1,2-propanediol glycol.

2. The mixture according to claim 1, wherein said mixture comprises:
(i) an ethoxylated castor oil containing from 10 to 150 ethyleneoxy groups, preferably from 20 to 80 ethyleneoxy groups -additive E484 and/or polyethylene glycol esters of fatty acids obtained from soybean oil -additive E487, and
(ii) vegetable oleins selected from the group comprising or, alternatively, consisting of an oleic acid, linoleic acid, linolenic acid, a triglyceride of oleic acid, a vegetable oil or mixtures thereof, and
(iii) a 1,2-propanediol glycol; preferably in an amount comprised from 55 to 20% by weight, even more preferably from 10 to 15% by weight, relative to the total weight of the mixture.

3. The mixture according to claim 1 or 2, wherein said (ii) vegetable oleins are selected from the group comprising or, alternatively, consisting of oleic acid, linoleic acid, linolenic acid, triglycerides of oleic acid, vegetable oil or mixtures thereof.

4. The mixture according to claim 3, wherein said vegetable oil is selected from the group comprising or, alternatively, consisting of olive oil, linseed oil, rapeseed oil, peanut oil, corn oil, palm oil, sunflower oil and soybean oil or mixtures thereof; preferably, said vegetable oil comprises or, alternatively, consists of an olive oil and/or a palm oil.

5. The mixture according to claim 3, wherein said vegetable oleins comprise or, alternatively, consist of an oleic acid in an amount comprised from 70 to 99% by weight, relative to the total weight of the vegetable olein, and/or a linoleic acid in an amount comprised from 30 to 1% by weight, relative to the total weight of the vegetable olein; or wherein said vegetable oleins comprise or, alternatively, consist of an oleic acid in an amount comprised from 75 to 90% by weight, relative to the total weight of the vegetable olein and/or of a linoleic acid in an amount comprised from 25% to 10% by weight, relative to the total weight of the vegetable olein; preferably an oleic acid in an amount comprised from 80 to 85% by weight, relative to the total weight of the vegetable olein, and/or a linoleic acid in an amount comprised from 20% to 15% by weight, relative to the total weight of the vegetable olein.

6. The mixture according to one of the preceding claims, wherein said vegetable oleins comprise or, alternatively, consist of a vegetable oil, according to claim 4, and an oleic acid and/or a linolenic acid, according to claim 3 or 5; in a ratio by weight comprised from 1:3 to 3:1 [vegetable oil:oleic acid and/or linolenic acid], preferably from 1:2 to 2:1 [vegetable oil:oleic acid and/or linolenic acid], even more preferably in a ratio by weight of 1:1 [vegetable oil:oleic acid and/or linolenic acid].

7. The mixture according to one of the preceding claims, wherein said mixture comprises said ethoxylated castor oil -additive E484 and/or said polyethylene glycol esters of fatty acids obtained from soybean oil - additive E487 and said vegetable oleins in a ratio by weight comprised from 1:4 to 4:1, preferably from 1:2 a 2:1, even more preferably 1:1.

8. The mixture according to any one of the preceding claims, wherein said mixture comprises or, alternatively, consists of:
- (i) ethoxylated castor oil containing 20 or 40 ethyleneoxy groups -additive E484, in an amount comprised from 40% to 60%, preferably 50% by weight, relative to the total weight of the mixture, and
- (ii) vegetable oleins selected from the group comprising or, alternatively, consisting of an oleic acid, linoleic acid, linolenic acid or mixtures thereof, in an amount comprised from 30% to 50%, preferably 40% by weight, relative to the total weight of the mixture, and
(iii) a 1,2-propanediol glycol, in an amount comprised from 5% to 15%, preferably 10% by weight, relative to the total weight of the mixture.

9. An animal feed in solid form containing liquid and/or solid nutritive substances, the latter in the form of powders or granules, **characterized in that** it comprises the mixture according to any one of the preceding claims 1-8.

10. A process for preparing an animal feed according to claim 9, wherein said process comprises at least a step in which the mixture, according to any one of the preceding claims 1-8, is directly or indirectly added, in the latter case having first been dissolved or suspended in water or added to a carrier, to the liquid and/or solid nutritive substances in powder or granular form or optionally other liquid or solid components of the animal feed.

11. The process according to claim 10, wherein said process comprises at least a step in which the mixture, according to any one of the preceding claims 1-8, is added to a hydrophobic component of animal or vegetable origin in liquid or solid form at room temperature, said hydrophobic component being selected from the group comprising animal and/or vegetable lipids, animal and/or vegetable oils and animal and/or vegetable fats, preferably an animal fat, and then the liquid and/or solid nutritive substances in powder or granular form or optionally other liquid or solid components of the animal feed are added.

## Patentansprüche

1. Mischung, umfassend:
(i) ein ethoxyliertes Castoröl mit 8 bis 200 Ethylenoxygruppen - Zusatzstoff E484 und/oder Polyethylenglykolester von Fettsäuren aus Sojabohnenöl - Zusatzstoff E487 und
(ii) pflanzliche Ölderivate (*vegetable oleins*), ausgewählt aus der Gruppe umfassend bzw. bestehend aus Ölsäure, Linolsäure, Linolensäure, ein(em) Triglycerid der Ölsäure, ein(em) Pflanzenöl (*vegetable oil*) oder Mischungen hiervon und
(iii) Propan-1,2-diol.

2. Mischung nach Anspruch 1, wobei die Mischung umfasst:
(i) ein ethoxyliertes Castoröl mit 10 bis 150 Ethylenoxygruppen, vorzugsweise 20 bis 80 Ethylenoxygruppen - Zusatzstoff E484, und/oder Polyethylenglykolester von Fettsäuren aus Sojabohnenöl - Zusatzstoff E487 und
(ii) pflanzliche Ölderivate, ausgewählt aus der Gruppe umfassend bzw. bestehend aus Ölsäure, Linolsäure, Linolensäure, ein(em) Triglycerid der Ölsäure, einem Pflanzenöl oder Mischungen hiervon und
(iii) Propan-1,2-diol; vorzugsweise in einer Menge von 55 bis 20 Gew.-%, noch bevorzugter 10 bis 15 Gew.-%, bezogen auf das Gesamtgewicht der Mischung.

3. Mischung nach Anspruch 1 oder 2, wobei die (ii) pflanzlichen Ölderivate ausgewählt werden aus der Gruppe umfassend bzw. bestehend aus Ölsäure, Linolsäure, Linolensäure, Triglyceride(n) der Ölsäure, Pflanzenöl oder Mischungen hiervon.

4. Mischung nach Anspruch 3, wobei das Pflanzenöl ausgewählt wird aus der Gruppe umfassend bzw. bestehend aus Olivenöl, Leinsamenöl, Rapsöl, Erdnussöl, Maisöl, Palmöl, Sonnenblumenöl und Sojabohnenöl oder Mischungen hiervon; vorzugsweise umfasst bzw. besteht das Pflanzenöl aus Olivenöl und/oder Palmöl.

5. Mischung nach Anspruch 3, wobei die pflanzlichen Ölderivate Ölsäure in einer Menge von 70 bis 99 Gew.-% bezogen auf das Gesamtgewicht des pflanzlichen Ölderivats und/oder Linolsäure in einer Menge von 30 bis 1 Gew.-% bezogen auf das Gesamtgewicht des pflanzlichen Ölderivats umfassen bzw. daraus bestehen; oder wobei die pflanzlichen Ölderivate Ölsäure in einer Menge von 75 bis 90 Gew.-% bezogen auf das Gesamtgewicht des pflanzlichen Ölderivats und/oder Linolsäure in einer Menge von 25 bis 10 Gew.-% bezogen auf das Gesamtgewicht des pflanzlichen Ölderivats, vorzugsweise Ölsäure in einer Menge von 80 bis 85 Gew.-% bezogen auf das Gesamtgewicht des pflanzlichen Ölderivats und/oder Linolsäure in einer Menge von 20 bis 15 Gew.-% bezogen auf das Gesamtgewicht des pflanzlichen Ölderivats, umfassen bzw. daraus bestehen.

6. Mischung nach einem der vorhergehenden Ansprüche, wobei die pflanzlichen Ölderivate ein Pflanzenöl nach Anspruch 4 und Ölsäure und/oder Linolensäure nach Anspruch 3 oder 5 in einem Gewichtsverhältnis von 1:3 bis 3:1 [Pflanzenöl:Ölsäure und/oder Linolensäure], vorzugsweise von 1:2 bis 2:1 [Pflanzenöl:Ölsäure und/oder Linolensäure], noch bevorzugter in einem Gewichtsverhältnis von 1:1 [Pflanzenöl:Ölsäure und/oder Linolensäure], umfassen bzw. daraus bestehen.

7. Mischung nach einem der vorhergehenden Ansprüche, wobei die Mischung das ethoxylierte Castoröl - Zusatzstoff E484 und/oder die Polyethylenglykolester von Fettsäuren aus Sojabohnenöl - Zusatzstoff E487 und die pflanzlichen Ölderivate in einem Gewichtsverhältnis von 1:4 bis 4:1, vorzugsweise 1:2 bis 2:1, noch bevorzugter 1:1, umfasst.

8. Mischung nach einem der vorhergehenden Ansprüche, wobei die Mischung Folgendes umfasst bzw. aus Folgendem besteht:
- (i) ein ethoxyliertes Castoröl mit 20 oder 40 Ethylenoxygruppen - Zusatzstoff E484, in einer Menge von 40 bis 60 Gew.-%, vorzugsweise 50 Gew.-%, bezogen auf das Gesamtgewicht der Mischung und
- (ii) pflanzliche Ölderivate, ausgewählt aus der Gruppe umfassend bzw. bestehend aus Ölsäure, Linolsäure, Linolensäure oder Mischungen hiervon in einer Menge von 30 bis 50 Gew.-%, vorzugsweise 40 Gew.-%, bezogen auf das Gesamtgewicht der Mischung und
(iii) Propan-1,2-diol in einer Menge von 5 bis 15 Gew.-%, vorzugsweise 10 Gew.-%, bezogen auf das Gesamtgewicht der Mischung.

9. Tierfuttermittel in fester Form, enthaltend flüssige und/oder feste Nährstoffe, letztere in Form von Pulvern oder Granulaten, **dadurch gekennzeichnet, dass** es die Mischung nach einem der vorhergehenden Ansprüche 1 bis 8 umfasst.

10. Verfahren zur Herstellung von Tierfuttermittel nach Anspruch 9, wobei das Verfahren zumindest einen Schritt umfasst, in dem die Mischung nach einem der vorhergehenden Ansprüche 1 bis 8 direkt oder indirekt, im letzteren Fall nach einer Auflösung oder Suspension in Wasser oder Hinzufügung zu einem Träger, zu den flüssigen und/oder festen Nährstoffen in pulvriger oder körniger Form oder ggf. zu anderen flüssigen oder festen Komponenten des Tierfuttermittels gegeben wird.

11. Verfahren nach Anspruch 10, wobei das Verfahren zumindest einen Schritt umfasst, in dem die Mischung nach einem der vorhergehenden Ansprüche 1 bis 8 zu einer bei Raumtemperatur flüssigen oder festen hydrophoben Komponente pflanzlichen oder tierischen Ursprungs hinzugefügt wird, wobei die hydrophobe Komponente aus der Gruppe umfassend Tier- und/oder Pflanzenlipide, Tier- und/oder Pflanzenöle und Tier- und/oder Pflanzenfette, vorzugsweise Tierfett, ausgewählt wird und dann die flüssigen und/oder festen Nährstoffe in pulvriger oder körniger Form oder ggf. andere flüssige oder feste Komponenten des Tierfuttermittels hinzugegeben werden.

## Revendications

1. Mélange comprenant :
(i) une huile de ricin éthoxylée contenant de 8 à 200 groupes éthylèneoxy - additif E484, et/ou des esters de polyéthylèneglycol d'acides gras obtenus à partir d'huile de soja - additif E487, et
(ii) des oléines végétales choisies dans le groupe comprenant ou, alternativement, consistant en un acide oléique, acide linoléique, acide linolénique, un triglycéride d'acide oléique, une huile végétale ou leurs mélanges, et
(iii) un 1,2-propanediol glycol.

2. Mélange selon la revendication 1, lequel mélange comprend :
(i) une huile de ricin éthoxylée contenant de 10 à 150 groupes éthylèneoxy, de préférence de 20 à 80 groupes éthylèneoxy - additif E484 et/ou des esters de polyéthylèneglycol d'acides gras obtenus à partir d'huile de soja - additif E487, et
(ii) des oléines végétales choisies dans le groupe comprenant ou, alternativement, consistant en un acide oléique, acide linoléique, acide linolénique, un triglycéride d'acide oléique, une huile végétale ou leurs mélanges, et
(iii) un 1,2-propanediol glycol ; de préférence en une quantité comprise de 55 à 20 % en poids, même plus préférentiellement de 10 à 15 % en poids, par rapport au poids total du mélange.

3. Mélange selon la revendication 1 ou 2, dans lequel lesdites oléines végétales (ii) sont choisies dans le groupe comprenant ou, alternativement consistant en l'acide oléique, l'acide linoléique, l'acide linolénique, les triglycérides d'acide oléique, une huile végétale ou leurs mélanges.

4. Mélange selon la revendication 3, dans lequel ladite huile végétale est choisie dans le groupe comprenant ou, alternativement consistant en une huile d'olive, huile de lin, huile de colza, huile d'arachide, huile de maïs, huile de palme, l'huile de tournesol et l'huile de soja, ou leurs mélanges ; de préférence ladite huile végétale comprend ou, alternativement, consiste en une huile d'olive et/ou une huile de palme.

5. Mélange selon la revendication 3, dans lequel lesdites oléines végétales comprennent ou, alternativement, consistent en un acide oléique en une quantité comprise de 70 à 99 % en poids, par rapport au poids total de l'oléine végétale, et/ou un acide linoléique en une quantité comprise de 30 à 1 % en poids, par rapport au poids total de l'oléine végétale ; ou dans lequel lesdites oléines végétales comprennent ou, alternativement, consistent en un acide oléique en une quantité comprise de 75 à 90 % en poids, par rapport au poids total de l'oléine végétale, et/ou un acide linoléique en une quantité comprise de 25 % à 10 % en poids, par rapport au poids total de l'oléine végétale ; de préférence un acide oléique en une quantité comprise de 80 à 85 % en poids, par rapport au poids total de l'oléine végétale, et/ou un acide linoléique en une quantité comprise de 20 % à 15 % en poids par rapport au poids total de l'oléine végétale.

6. Mélange selon l'une des revendications précédentes, dans lequel lesdites oléines végétales comprennent ou, alternativement, consistent en une huile végétale, selon la revendication 4, et un acide oléique et/ou un acide linolénique, selon la revendication 3 ou 5 ; en un rapport en poids compris de 1/3 à 3/1 [huile végétale / acide oléique et/ou acide linolénique], de préférence de 1/2 à 2/1 [huile végétale / acide oléique et/ou acide linolénique], même plus préférentiellement en un rapport en poids de 1/1 [huile végétale / acide oléique et/ou acide linolénique].

7. Mélange selon l'une des revendications précédentes, dans lequel ledit mélange comprend ladite huile de ricin éthoxylée - additif E484 et/ou lesdits esters de polyéthylèneglycol d'acides gras obtenus à partir d'huile de soja - additif E487 et lesdites oléines végétales en un rapport en poids compris de 1/4 à 4/1, de préférence de 1/2 à 2/1, même plus préférentiellement 1/1.

8. Mélange selon l'une quelconque des revendications précédentes, dans lequel ledit mélange comprend ou, alternativement, consiste en :
(i) une l'huile de ricin éthoxylée contenant 20 ou 40 groupes éthylèneoxy - additif E484, en une quantité comprise de 40 % à 60 %, de préférence 50 % en poids, par rapport au poids total du mélange, et
(ii) des oléines végétales choisies dans le groupe comprenant ou, alternativement, consistant en un acide oléique, acide linoléique, acide linolénique ou leurs mélanges, en une quantité comprise de 30 % à 50 %, de préférence 40 % en poids, par rapport au poids total du mélange, et
(iii) un 1,2-propanediol glycol en une quantité comprise de 5 % à 15 %, de préférence 10 % en poids, par rapport au poids total du mélange.

9. Aliment pour animaux sous forme solide contenant des substances nutritives liquides et/ou solides, ces dernières sous la forme de poudres ou granules, **caractérisé en ce qu'**il comprend le mélange de l'une quelconque des revendications précédentes 1 à 8.

10. Procédé pour préparer un aliment pour animaux selon la revendication 9, dans lequel ledit procédé comprend au moins une étape dans laquelle le mélange de l'une quelconque des revendications précédentes 1 à 8 est directement ou indirectement ajouté, dans ce dernier cas ayant été préalablement dissous ou mis en suspension dans de l'eau ou ajouté à un support, aux substances nutritives liquides et/ou solides sous forme de poudres ou de granules ou optionnellement à d'autres composants liquides ou solides de l'aliment pour animaux.

11. Procédé selon la revendication 10, dans lequel ledit procédé comprend au moins une étape dans laquelle le mélange de l'une quelconque des revendications précédentes 1 à 8 est ajouté à un composant hydrophobe d'origine animale ou végétale sous forme liquide ou solide à la température ambiante, ledit composant hydrophobe étant choisi dans le groupe constitué par des lipides animaux et/ou végétaux, des huiles animales et/ou végétales et des graisses animales et/ou végétales, de préférence une graisse animale, et ensuite les substances nutritives liquides et/ou solides sous forme de poudres ou de granules ou optionnellement d'autres composants liquides ou solides de l'aliment pour animaux sont ajoutés.
